# EUROPÄISCHE PATENTANMELDUNG

(11) **EP 1 221 801 A2**
(43) Veröffentlichungstag der Anmeldung: **10.07.2002**
(21) Anmeldenummer: 02360011.7
(22) Anmeldetag: 08.01.2002
(51) Int. Cl.: H04M 1/725, H04M 1/247

(54) **System mit Informationsausgabe-Vorrichtung und Mobilkommunikationsendgerät**

(30) Priorität: 09.01.2001 DE 10100648
(71) Anmelder: ALCATEL, 75008 Paris (FR)
(72) Erfinder: Klumpp, Dieter, Dr., 70430 Stuttgart (DE)
(74) Vertreter: Schultenkämper, Johannes

(57) **Zusammenfassung**

Es sind Informationsausgabe-Vorrichtungen zum Aufstellen an öffentlichen Plätzen bekannt, die üblicherweise als Diensteterminals oder Informationsterminals eingesetzt werden, wie etwa Fahrkartenautomaten auf Bahnhöfen bzw. Touristeninformationterminals in Stadtzentren. Über einen großflächigen Bildschirm und über leistungsstarke Lautsprecher werden Informationen visuell dargestellt bzw. akustisch ausgegeben, die zuvor als Video- oder Audiodaten über ein Datennetz, an das die Vorrichtung angeschlossen ist, empfangen worden sind.

Der Erfindung liegt die Erkenntnis zugrunde, dass Informationen, die über ein Mobilkommunikationsendgerät (20) empfangen wird, direkt an eine stationär installierte Informationsausgobe-Vorrichtung (10) übertragen und dort mit hoher Qualität ausgegeben werden können. Dazu wird die Informationsausgabe-Vorrichtung (10) um ein Empfangsteil (13) erweitert, das von einem sich in der Nähe der Vorrichtung (10) befindlichen Mobilkommunikationsendgerät (20) Informationssignale mit Videound/oder Audio-Daten drahtlos empfängt und das diese Daten an das Video- bzw. Audioteil weitergibt zur Ausgabe auf dem Bildschirm (11) bzw. Lautsprecher (11).

## Beschreibung

Die Erfindung betrifft eine Informationsausgabe-Vorrichtung nach dem Oberbegriff des Anspruchs 1, ein Mobilkommunikationsendgerät nach dem Oberbegriff des Anspruch 7 sowie ein damit geschaffenes System nach dem Oberbegriff des Anspruch 8.

Es sind Informationsausgabe-Vorrichtungen zum Aufstellen an öffentlichen Plätzen bekannt, die üblicherweise als Diensteterminals oder Informationsterminals eingesetzt werden. Beispiele für solche bekannten Vorrichtungen sind Fahrkartenautomaten auf Bahnhöfen und Flughäfen oder Touristeninformationterminals in Stadtzentren, Veranstaltungsorten, Museen etc. . Diese Vorrichtungen sind mit einem, zumeist großflächigen, Bildschirm ausgestattet, auf dem Informationen visuell dargestellt werden. Diese Informationen werden üblicherweise als Videodaten über ein Datennetz, an das die Vorrichtung angeschlossen ist, empfangen. Oder die Informationen stammen ganz oder teilweise von einem in der Vorrichtung vorgesehenen Datenspeicher. Damit der Nutzer die Vorrichtung bedienen kann, ist üblicherweise eine Tastatur vorgesehen. Es gibt auch Vorrichtungen, die zusätzlich einen oder zwei Lautsprecher enthalten, über die Audiodaten ausgegeben werden. Es sind also Informationsausgabe-Vorrichtung zum Aufstellen an öffentlichen Plätzen bekannt mit einem Bildschirm und/oder mit mindestens einem Lautsprecher, die von einem Video- bzw. Audioteil gesteuert werden. Diese bekannten Vorrichtungen sind demnach multimedia-fähig, haben aber den Nachteil, dass nur solche Informationen auf dem Bildschirm und/oder über die Lautsprecher ausgegeben werden, die aus dem Datennetz abgerufen werden oder die auf dem Datenspeicher bereits vorhanden sind. In der heutigen Zeit ist es wünschenswert, überall schnell und einfach Daten empfangen zu können und die darin enthaltene Information in einer ansprechenden Form, d.h. über einen großen Bildschirm und leistungsstarke Lautsprecher ausgegeben zu bekommen.

Der Erfindung liegt die Erkenntnis zugrunde, dass Informationen, die über ein Mobilkommunikationsendgerät empfangen wird, direkt an eine stationär installierte Informationsausgabe-Vorrichtung übertragen und dort mit hoher Qualität ausgegeben werden können. Damit wird die Möglichkeit des mobilen Empfangs von Informationen verbunden mit einer hochwertigen und ansprechenden Video- und/oder Audioausgabe.

Erfindungsgemäß wird dazu die eingangs genannte Informationsausgabe-Vorrichtung erweitert um ein Empfangsteil, das von einem sich in der Nähe der Vorrichtung befindlichen Mobilkommunikationsendgerät Informationssignale mit Video- und/oder Audio-Daten drahtlos empfängt und das diese Daten an das Video- bzw. Audioteil weitergibt zur Ausgabe auf dem Bildschirm bzw. Lautsprecher.

Dadurch wird eine direkte drahtlose Übertragung von Informationssignalen, insbesondere von solchen, die Multimedia-Daten enthalten, von dem Mobilfunkendgerät zu der stationär installierten Vorrichtung ermöglicht, um die visuelle Informationen dort auf dem großflächigen Bildschirm darzustellen und/oder die akustische Information über die Lautsprecher auszugeben.

Außerdem wird ein dafür geeignetes Mobilkommunikationsendgerät vorgeschlagen sowie ein aus der Vorrichtung und dem Mobilkommunikationsendgerät geschaffenes System.

Besonders vorteilhafte Ausgestaltungen der Erfindung ergeben sich aus den Unteransprüchen:

Demnach ist es besonders vorteilhaft, wenn das Empfangsteil ein Funksignal-Empfangsteil für Kurzstreckenübertagung oder ein Infrarotsignal-Empfangsteil ist. Die Realisierung des Empfangsteils wird hiermit vereinfacht, da es für diese Arten der Kurzstrecken-Datenübertragung zahlreiche Standards, wie etwa Bluetooth oder HAVI (Home Audio Video Interoperability), mit entsprechend konzipierten Standardbauteilen gibt. Zudem werden Mobilfunkendgeräte im zunehmenden Maße mit zusätzlichen Sendeempfängern für Funk- oder Infrarot-Kurzstreckenübertragung ausgestattet.

Es ist auch besonders vorteilhaft, wenn das Empfangsteil auch Signalisierungsdaten von dem Mobilkommunikationsendgerät drahtlos empfängt und an das Video- und/oder Audioteil zum Steuern der Ausgabe weitergibt. Dadurch wird eine Fernsteuerung der Vorrichtung ermöglicht. Der Benutzer des Mobilkommunikationsendgerätes kann somit nicht nur die Übertragung von Daten an die Vorrichtung veranlassen, sondern auch die Vorrichtung selbst fernbedienen, um die Darstellung von Videodaten zu verändern (z.B. Zoomfunktion) oder um die Ausgabe von Audiodaten zu beeinflussen (z.B. Einstellung der Tonwiedergabe oder Sprachenauswahl).

Außerdem ist es von besonderem Vorteil, wenn die Vorrichtung auch ein Sendeteil enthält, das von dem Video- und/oder Audioteil erzeugte Signalisierungsdaten drahtlos zu dem Mobilkommunikationsendgerät sendet. Die Vorrichtung steht damit in bidirektionaler Kommunikation mit dem Mobilfunkendgerät. Dadurch kann z.B. eine von der Vorrichtung angegebene Menüauswahl an das Mobilfunkendgerät übertragen werden. Dies ermöglicht beispielsweise eine interaktive, benutzergeführte Fernbedienung. In diesem Zusammenhang ist es vorteilhaft, wenn die Vorrichtung auch eine Tastatur oder Spracheingabemittel enthält zum Steuern der Ausgabe. Damit kann anstelle oder zusätzlich zu der genannten Fernbedienung eine direkte Bedienung, vorzugsweise per Sprachsteuerung, erfolgen.

Es ergeben sich auch besondere Vorteile, wenn das Video- und/oder Audioteil Datenkonvertierungsmittel enthalten, die die empfangenen Video- bzw. Audio-Daten konvertieren zur Ausgabe über den Bildschirm bzw. Lautsprecher. Durch diese Maßnahmen wird die Akzeptanz der Vorrichtung deutlich erhöht, da die Übertragung und Ausgabe von Information weitestgehend unabhängig vom Datenformat ist.

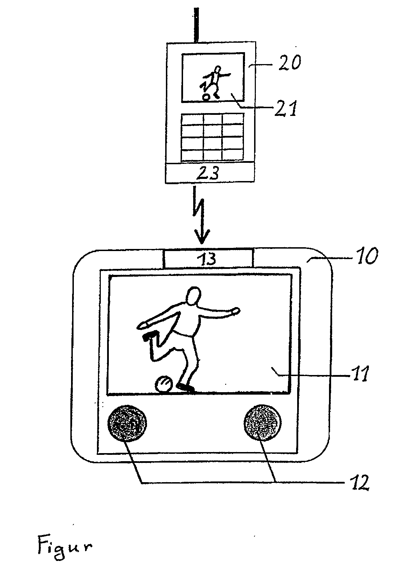

Die Erfindung und die sich daraus ergebenden Vorteil werden im folgenden noch genauer beschrieben anhand eines Ausführungsbeispiels, das in der beiliegenden Zeichnung schematisch dargestellt ist:

Die Figur zeigt eine Vorrichtung 10, die überall stationär installiert werden kann, insbesondere an öffentlichen Plätzen. Die Vorrichtung 10 enthält einen Bildschirm 11, der aus einem LCD (Liquid Crystal Display) besteht, das von einem (nicht dargestellten) Videoteil gesteuert wird. Die Vorrichtung 10 enthält außerdem zwei Lautsprecher 12, die von einem (nicht dargestellten) Audioteil gesteuert werden. Somit ist die Vorrichtung zur multimedialen Video- und Audiowiedergabe geeignet. Herkömmlicherweise werden entsprechende Video- bzw. Audiodaten aus einem Netzwerk, an das die Vorrichtung angeschlossen ist, abgerufen, wobei die Vorrichtung mittels einer Tastatur bedient wird. Erfindungsgemäß verfügt die Vorrichtung nun auch über ein Empfangsteil 13, das von einem sich in der Nähe der Vorrichtung befindlichen Mobilkommunikationsendgerät 20 Informationssignale mit Video- und/oder Audio-Daten drahtlos empfängt und das diese Daten dann an das Video- bzw. Audioteil weitergibt zur Ausgabe auf dem Bildschirm 11 bzw. über die Lautsprecher 12.

Zur Übertragung der Daten ist das in der Figur dargestellte Empfangsteil 13 als Funkempfänger für Kurzstreckenübertragung nach dem sogenannten Bluetooth-Standard ausgebildet. Damit kann die Vorrichtung 10 sowohl Nutzdaten wie auch Steuerdaten mit dem Mobilkommunikationsendgerät 20 austauschen. Als Nutzdaten werden etwa Videodaten im MPEG-Format, Bilddaten im JPG-Format, Textdaten im RFT-Format, Audiodaten im WAV-Format oder Musikdaten im MP3-Format übertragen. In dem in der Figur dargestellten Beispiel empfängt das Mobilkommunikationsendgerät 20 von einem Mobilfunknetz, das nach dem UMTS-Standard (Universal Mobile Telecommunications System) arbeitet, Video- und Audiodaten. Der Benutzer des Mobilkommunikationsendgerätes 10 nutzt einen Dienst zur Live-Übertragung von Sportereignissen, hier ein Fußballspiel. Die Darstellung auf der im allgemeinen recht kleinen Anzeigefläche (Display) des Mobilfunkendgerätes ist qualitativ nicht zufriedenstellend. Dies gilt ebenfalls für die Tonwiedergabe über den Lautsprecher des Mobilfunkendgerätes 20.

Deshalb macht der Benutzer von der Vorrichtung 10 und von den dort vorhandenen Ausgabemitteln, d.h. von dem Bildschirm 11 und von den Lautsprechern 12, Gebrauch. Dazu begibt er sich in die Nähe einer erfindungsgemäßen Vorrichtung und veranlasst eine direkte Kurzstrecken-Übertragung der Video- und Audiodaten von seinem Mobilkommunikationsendgerät 20 an diese Vorrichtung 10 über die entsprechenden Sendeempfangsmittel 23 und 13. Mittels der Vorrichtung 10, die über ein mit dem Empfänger 13 verbundenes (nicht dargestelltes) Video- und Audioteil verfügt, erfolgt dann eine großflächige und hochauflösende Video-Darstellung auf dem Bildschirm 11 sowie eine hochwertige Tonwiedergabe über die Lautsprecher 12. Die Vorrichtung 10 verfügt auch über (nicht dargestellte) Datenkonvertierungsmittel, die gegebenenfalls eine Konvertierung der von dem Empfangsteil 13 empfangenen Nutzdaten durchführen zur anschließenden Darstellung und Ausgabe.

Mit Hilfe der vorgeschlagenen Vorrichtung wird erreicht, dass der Inhalt von Nutzdaten, die mobil und damit ortsunabhängig empfangen werden, dennoch mit einer hohen Qualität, insbesondere mit einer hohen visuellen Auflösung bzw. akustischen Güte, wiedergegeben werden. Die erfindungsgemäße Vorrichtung vergrößert und verbessert deutlich die Darstellung des Inhaltes (im Englischen auch als "content" bezeichnet). Der Inhalt in Form von Bild, Diagramm, Film, Ton, Sprache, Musik etc. wird also verstärkt wiedergegeben. Die Vorrichtung könnte demnach auch als "content booster" (content = Inhalt; booster = Verstärker) bezeichnet werden.

Die Erfindung ist besonders geeignet, um in öffentliche Informations-Terminals und Dienstleistungsautomaten integriert zu werden. Durch die Ausstattung mit einem Empfangsteil für die direkte Kommunikation mit mobilen Endgeräten sind neue, sehr attraktive Dienste denkbar. Beispielsweise können Musikdaten, die im mobilen Endgerät im MP3-Format gespeichert sind, an die Vorrichtung übertragen und dort verstärkt wiedergegeben werden. Gleiches gilt für Textdaten, insbesondere für Kurznachrichten, die mobil über SMS (Short Message Service) empfangen wurden. Ebenso gilt dies auch für Bilddaten, die etwa über einen mobilen Internet-Zugang abgerufen wurden oder die über eine Digitalkamera aufgenommen wurden. Besonders hinsichtlich der Wiedergabe von Musikdaten ist zu betonen, dass die Möglichkeit besteht, die Musikdaten (etwa im MP3-Format) mit einem urheberrechtlich abgegoltenen Zahlungsvorgang auf das mobile Terminal zu holen und es über die stärkeren Lautsprecher der hier vorgeschlagenen Vorrichtung ("content booster") wiederzugeben.

Wie diese Beispiele zeigen, ist die Nutzung der erfindungsgemäßen Vorrichtung als "content booster" sehr vielseitig.

Es ist auch eine bidirektionale Übertragung von Nutz- und Signalisierungsdaten zwischen dem Mobilkommunikationsendgerät und der Vorrichtung denkbar, die neue interaktive und benutzergeführte Dienste ermöglicht. Beispielsweise kann der Benutzer, wenn er sich häufig auf Geschäftsreisen befindet, über sein Mobilkommunikationsendgerät den aktuellen Bahnfahrplan oder Flugplan mit den gewünschten individuellen Reiseverbindungen abrufen. Sobald er am Bahnhof oder Flughafen eintrifft geht der Benutzer zu einer als Fahrkarten- oder Ticketautomat ausgeführten Vorrichtung und veranlasst eine Übertragung seiner Reisedaten, so dass der Automat sofort die entsprechende Fahrkarte bzw. das Flugticket ausgeben kann. Gleiches gilt z.B. auch für Hotelbuchungen. Im privaten Bereich könnten z.B. Buchungen von Urlaubsreisen durch Einsatz der beschriebenen Vorrichtung automatisiert werden. Die Nutzung der vorgeschlagenen Vorrichtung kann für den Benutzer kostenlos oder zumindest sehr preiswert angeboten werden, wenn auf dem Bildschirm der Vorrichtung Werbefenster eingeblendet werden.

Die beschriebenen Beispiele geben nur einen Teil der denkbaren Anwendungen wieder. Der Einsatz der Erfindung ist in fast allen Lebensbereichen, wo eine hochwertige und ansprechende Darstellung von Informationen entscheidend ist für die Akzeptanz von Diensten.

## Patentansprüche

1. Informationsausgabe-Vorrichtung (10) zum Aufstellen an öffentlichen Plätzen mit einem Bildschirm (11) und/oder mit mindestens einem Lautsprecher (12), die von einem Video- bzw. Audioteil gesteuert werden,
**dadurch gekennzeichnet, dass**
die Vorrichtung (10) ein Empfangsteil (13) enthält, das von einem sich in der Nähe der Vorrichtung (10) befindlichen Mobilkommunikationsendgerät (20) Informationssignale (30) mit Video- und/oder Audio-Daten drahtlos empfängt und das diese Daten an das Video- bzw. Audioteil weitergibt zur Ausgabe auf dem Bildschirm (11) bzw. Lautsprecher (12).

2. Vorrichtung (10) nach Anspruch 1, **dadurch gekennzeichnet, dass** das Empfangsteil ein Funksignal-Empfangsteil (13) für Kurzstreckenübertagung oder ein Infrarotsignal-Empfangsteil ist.

3. Vorrichtung (10) nach Anspruch 1, **dadurch gekennzeichnet, dass** das Empfangsteil (13) auch Signalisierungsdaten von dem Mobilkommunikationsendgerät (20) drahtlos empfängt und an das Video- und/oder Audioteil zum Steuern der Ausgabe weitergibt.

4. Vorrichtung (10) nach Anspruch 1, **dadurch gekennzeichnet, dass** die Vorrichtung (10) auch ein Sendeteil enthält, das von dem Video- und/oder Audioteil erzeugte Signalisierungsdaten drahtlos zu dem Mobilkommunikationsendgerät (20) sendet.

5. Vorrichtung (10) nach Anspruch 1, **dadurch gekennzeichnet, dass** die Vorrichtung (10) eine Tastatur oder Spracheingabemittel enthält zum Steuern der Ausgabe.

6. Vorrichtung (10) nach Anspruch 1, **dadurch gekennzeichnet, dass** das Video- und/oder das Audioteil Datenkonvertierungsmittel enthalten, die die empfangenen Video- bzw. Audio-Daten konvertieren zur Ausgabe auf dem Bildschirm (11) bzw. Lautsprecher (12).

7. Mobilkommunikationsendgerät (20) zum Senden von Informationssignalen (30) an eine Informationsausgabe-Vorrichtung (10) zum Aufstellen an öffentlichen Plätzen mit einem Bildschirm (11) und/oder mit mindestens einem Lautsprecher (12), die von einem Video- bzw. Audioteil gesteuert werden,
**dadurch gekennzeichnet, dass**
Informationssignale (30) Video- und/oder Audio-Daten enthalten, dass das Mobilkommunikationsendgerät (20) Sendemittel (23) enthält, die die Informationssignale (30) mit den Video- und/oder Audio-Daten drahtlos an die Vorrichtung (10) senden, und dass die Vorrichtung (10) ein Empfangsteil (13) enthält, das von dem sich in der Nähe der Vorrichtung (10) befindlichen Mobilkommunikationsendgerät (20) diese Informationssignale (30) drahtlos empfängt und das diese Daten an das Video- bzw. Audioteil weitergibt zur Ausgabe auf dem Bildschirm (11) bzw. Lautsprecher (12).

8. System mit einer Informationsausgabe-Vorrichtung (10) zum Aufstellen an öffentlichen Plätzen mit einem Bildschirm (11) und/oder mit mindestens einem Lautsprecher (12), die von einem Video- bzw. Audioteil gesteuert werden, und mit einem Mobilkommunikationsendgerät (20) zum Senden von Informationssignalen (30) an die Informationsausgabe-Vorrichtung (10),
**dadurch gekennzeichnet, dass**
die Informationssignale (30) Video- und/oder Audio-Daten enthalten, dass das Mobilkommunikationsendgerät (20) Sendemittel (23) enthält, die die Informationssignale (30) mit den Video- und/oder Audio-Daten drahtlos an die Vorrichtung (10) senden, und dass die Vorrichtung (10) ein Empfangsteil (13) enthält, das von dem sich in der Nähe der Vorrichtung (10) befindlichen Mobilkommunikationsendgerät (20) diese Informationssignale (30) drahtlos empfängt und das diese Daten an das Video- bzw. Audioteil weitergibt zur Ausgabe auf dem Bildschirm (11) bzw. Lautsprecher (12).
